# EUROPÄISCHE PATENTANMELDUNG

(11) **EP 0 588 279 A2**
(43) Veröffentlichungstag der Anmeldung: **23.03.1994**
(21) Anmeldenummer: 93114662.5
(22) Anmeldetag: 13.09.1993
(51) Int. Cl.: H01M 2/10

(54) **Befestigungsvorrichtung für elektrochemische Speicherzelle**

(30) Priorität: 14.09.1992 DE 4230673; 12.07.1993 DE 4323274
(71) Anmelder: Scheel, Ulrike, D-80687 München (DE)
(72) Erfinder: Scheel, Ulrike, D-80687 München (DE)

(57) **Zusammenfassung**

© Die Erfindung bezieht sich auf eine zylindrische, elektrochemische Speicherzelle mit Aufnahme- und Befestigungsvorrichtung in Form eines Gewindezylinders, der es ermöglicht, daß die Energieversorgung eines Energieverbrauchers erfolgt, ohne daß die Speicherzelle auf herkömmliche Art in einen in dem Gerät dafür vorgesehenen Behälter eingelegt wird.

Die Aufnahme- und Befestigungsvorrichtung besteht aus einer zylindrischen Erhöhung im Deckelbereich der Speicherzelle, die außen mit einem Schraubgewinde versehen ist (Fig. 1). Der zu versorgende Energieverbraucher ist mit einer Aufnahme-und Befestigungsvorrichtung in Form einer Fassung mit einem Innengewinde (Fig. 2) ausgerüstet.

Das Verbindungssystem zwischen Energiezelle und Energieverbraucher kann auch in Form konischer Gewinde, als Bajonettverschluß oder einfache Steckverbindung mit bzw. ohne Befestigungseinrichtung ausgestaltet werden, wobei Speicherzelle als auch Energieverbraucher mit Aufnahmezylinder bzw. -fassung ausgestattet werden können.

Die Kontaktierung der +- und -Anschlüsse erfolgt mittels Aufnahmevorrichtungen von Speicherzellen und Energieverbrauchern.

Zur weiteren Ausgestaltung gehören: Verbindungssystem zwischen Speicherzellen (Fig. 3), Kunststoffgehäuse für Speicherzellen (Fig. 5 und 6), Adapter zur Integration von herkömmlichen Rundzellen in das erfindungsgemäße Verbindungssystem (Fig. 7) sowie ein Beleuchtungskörper als Energieverbraucher (Fig. 8).

## Beschreibung

Die Erfindung betrifft eine zylindrische, elektrochemische Speicherzelle mit einer Aufnahmevorrichtung für Energieverbraucher.

Aus dem Stand der Technik sind bereits Flachbatterien mit einer Aufnahmevorrichtung (Fassung) für einen Energieverbraucher (Glühbirne) bekanntgeworden.

Elektrochemische Speicherzellen dienen der Energieversorgung von Geräten. Zu diesem Zweck werden eine oder mehrere Zellen in einen Behälter, der Bestandteil eines Gerätes ist, eingelegt. Üblicherweise verbleiben Speicherzellen, die einmal in ein Gerät eingelegt wurden, unabhängig von der Anwendungsfrequenz in diesem Gerät, bis sie entsorgt werden müssen. Da sich Speicherzellen jedoch nicht nur durch zweckdienliche Energieabgabe entladen, sondern auch bereits durch die Lagerung in einem Gerät, erscheint es sinnvoll, die Energiezelle im Bedarfsfall auch anderen Energieverbrauchern auf einfache Art zur Verfügung zu stellen. Dies wird jedoch bei den meisten Geräten durch ein unpraktisches Handling behindert, so daß ein technisches Bedürfnis des problemlosen Anschlusses von Speicherzellen an den Energieverbraucher ohne zusätzliche Batterieaufnahmebehälter oder -gehäuse besteht.

Dieses Problem wird durch die im Patentanspruch 1 genannte Speicherzelle mit Aufnahmevorrichtung für Energieverbraucher gelöst.

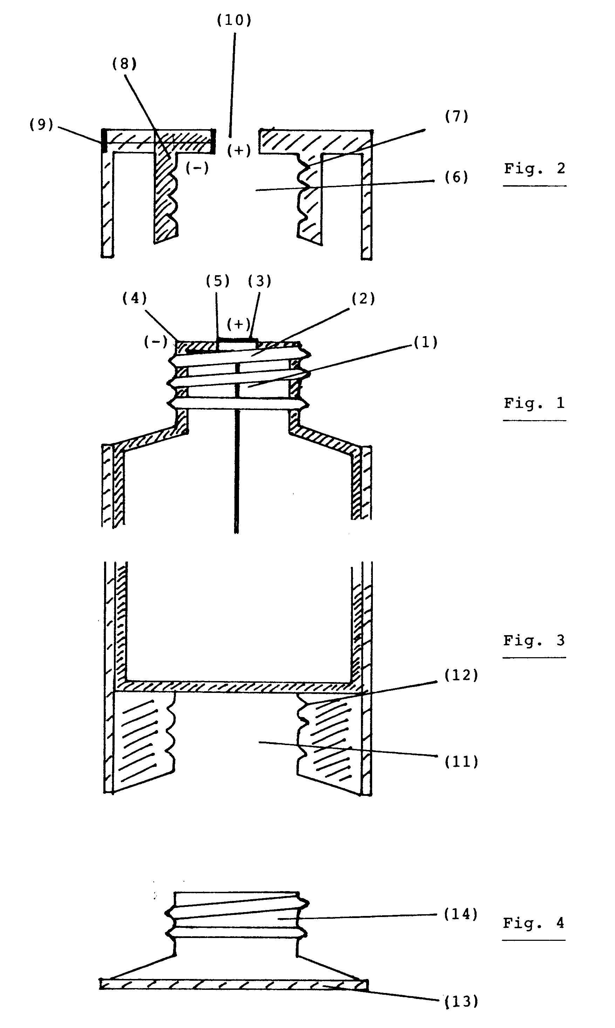

Wesentliches Merkmal der Aufnahmevorrichtung (Fig. 1) ist die mittige Erhöhung der Deckelkappe in Form eines Kreiszylinders (1), dessen Mantel außen mit einem Schraubgewinde (2) versehen ist. Auf der oberen Kreisfläche des Zylinders befindet sich der + Pol der Zelle (3). Der Mantel des Aufnahmezylinders dient als -Pol der Zelle (4). +- und -Pol sind von einander isoliert (5). Mittels dieses Gewindezylinders läßt sich die Speicherzelle leicht außen an jeden Energieverbraucher, der mit einer Fassung mit einem entsprechenden Innengewinde sowie den technischen Erfordernissen für Energietransport und-regulierung verfügt, anschrauben.

Fig. 2 zeigt eine Fassung, die Bestandteil eines Energieverbrauchers gemäß Patentanspruch 2 ist. Die Fassung (6) ist mit einem Innengewinde (7) ausgestattet und dient der Aufnahme und Befestigung einer Speicherzelle nach Patentanspruch 1. Ein Teilbereich der Fassung dient als negativer Anschluß (8). Er ist mit einem Schalter (9) zur Unterbrechung der Stromversorgung verbunden. Der positive Anschluß (10) erfolgt direkt vom + Pol der Zelle oder mittels einer Überbrückung.

Fig. 3 stellt die bodenseitige Fassung (11) einer Speicherzelle nach Patentanspruch 4 dar. Die Fassung ist mit einem Innengewinde (12) zur Befestigung einer Speicherzelle nach Patentanspruch 1 versehen.

Durch die Ausstattung der Speicherzelle mit einer zusätzlichen bodenseitigen Aufnahmevorrichtung können mehrere Zellen direkt miteinander verbunden werden, bis die gewünschte Stromversorgung des Energieverbrauchers erreicht ist.
Fig. 4 zeigt einen Verschlußstopfen nach Patentanspruch 5, der als Abschluß einer bodenseitigen Fassung einer Speicherzelle dient. Er besteht aus einer runden Bodenplatte (13) und einem Einschraubgewinde (14).

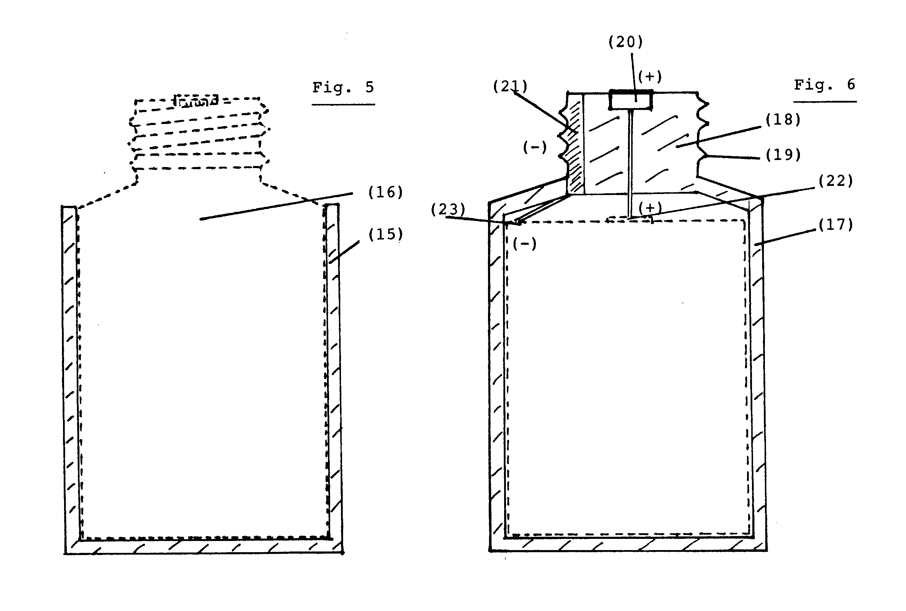

Fig. 5 zeigt ein becherförmiges Kunststoffgehäuse (15) gemäß Patentanspruch 6, das eine Speicherzelle nach Patentanspruch 1 (16) umschließt. Kunststoffgehäuse für Speicherzellen nach Patentanspruch 4 sind mit einer entsprechenden Öffnung am Boden versehen.

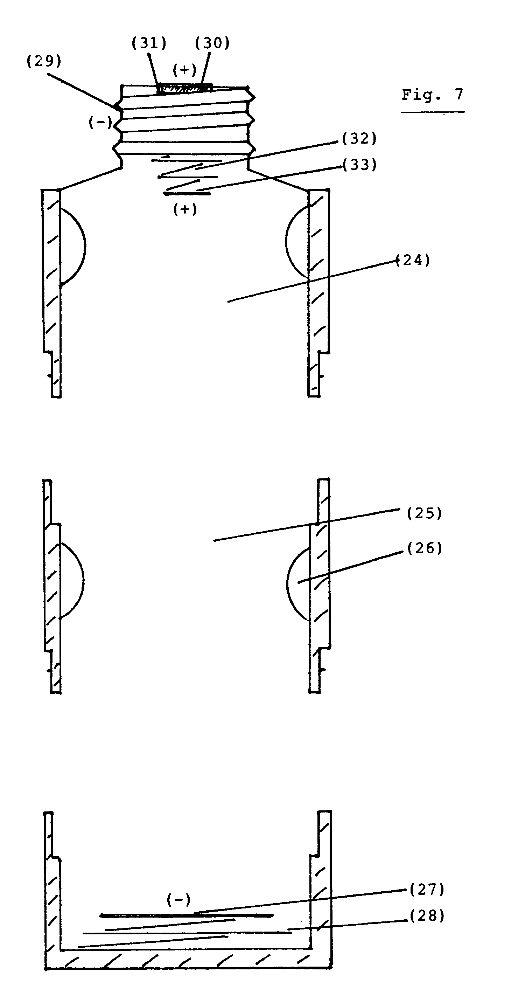

Fig. 6 stellt ein Kunststoffgehäuse (17) nach Patentanspruch 7 dar, das eine oder mehrere Speicherzellen, die nicht mit einer Aufnahmevorrichtung ausgestattet sind, umschließt. Als Aufnahmemedium für den Energieverbraucher dient der obere Bereich des Kunststoffgehäuses, der die Form eines Aufnahmezylinders (18) mit Außengewinde (19) aufweist. Bereiche für den positiven (20) und negativen (21) Anschluß sind in dem Aufnahmezylinder des Gehäuses vorgesehen und sind mit dem +-(22) und -Pol (23) der Speicherzelle/-n verbunden.

Entscheidend für die Auswahl der Werkstoffe ist der Anwendungsbereich. Verwendete Kunststoffe sollten für Gehäuse geeignet sein. Energieverbraucher, Adapter sowie Verschlußstopfen können aus dem gleichen Kunststoff bestehen.

Durch die Verwendung eines Adapters (Fig. 7) nach Patentanspruch 8 können herkömmliche Speicherzellen in das erfindungsgemäße Verbindungssystem integriert werden. Zu diesem Zweck werden die Zellen in den Behälter (24) des Adapters eingelegt. Je nach Anzahl der Zellen ist die Höhe des Adapters durch Einfügen von Zwischenelementen (25) beliebig variierbar. Durch an der Innenwandung des Behälters angebrachten Positionierungseinrichtungen (26) können auch Zellen mit geringem Durchmesser Verwendung finden.

Der Behälter besteht aus leitendem Material. Ist dies nicht der Fall, wird der Kontakt zwischen dem bodenseitigen -Pol, d. h. dem Kontaktplättchen (27), das durch eine Feder (28) mit dem Behälter verbunden ist, zum negativen Anschluß (29) im Aufnahmezylinder überbrückt. Der positive Anschluß (30) des Adapters befindet sich, isoliert vom -Pol (31), auf der Kreisfläche des Aufnahmezylinders. Nach innen ist er mittels einer Feder (32) mit einem Kontaktplättchen (33) verbunden, das den + Pol der einliegenden Rundzelle kontaktiert.

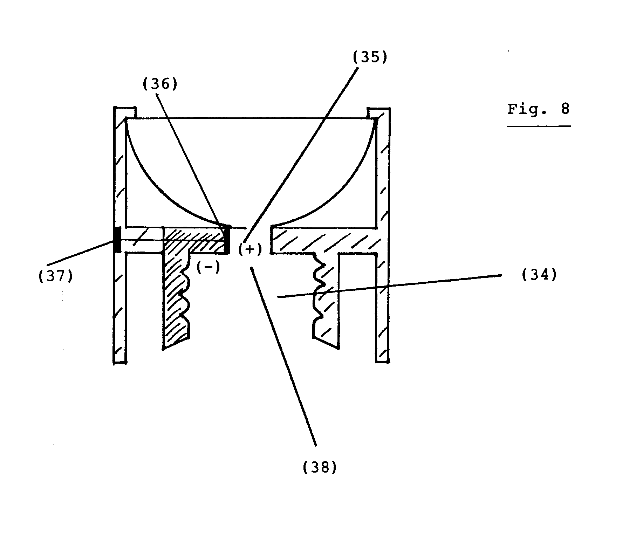

Fig. 8 zeigt einen Energieverbraucher, der als Beleuchtungskörper ausgestaltet ist. Gemäß Patentanspruch 9 ist der Beleuchtungskörper mit einer Aufnahme- und Befestigungsvorrichtung (34) für einen Energieversorger nach Patentanspruch 1, 4, 6, 7 bzw. 8 versehen. Die Aufnahme- und Befestigungsvorrichtung für die Glühbirne (35) ist mit einem negativen Anschluß (36) versehen, der den -Pol der Glühbirne kontaktiert. Durch einen Schalter (37) kann die Stromversorgung unterbrochen werden. Der positive Kontakt erfolgt direkt durch den + Pol des Energieversorgers (38) oder mittels einer Überbrückung.

Was die Auswahl von Werkstoffen, Abmessungen und die technische Ausstattung, die durch das jeweilige elektrochemische System erforderlich sein kann, betrifft, so ist grundsätzlich die optimale Funktionsfähigkeit entscheidend. Dies gilt insbesondere für die Ausgestaltung der Verbindungssysteme. Eine feste und sichere Verbindung muß ebenso gewährleistet sein wie eine einfache und schnelle Handhabung. Die Verbindungen dürfen sich bei Erschütterung nicht lösen und verdrehen, müssen jedoch im Bedarfsfall leicht und schnell lösbar sein.

Die Erfindung wird anhand zylindrischer Gewinde dargestellt, bezieht sich jedoch auch auf die Ausgestaltung des Verbindungssystems in Form konischer Gewinde, Bajonettverschlüsse, einfacher Steckverbindungen mit bzw. ohne Befestigungseinrichtungen, wobei auch der Energieverbraucher mit einem Aufnahmezylinder und der Energieversorger mit einer entsprechenden Fassung ausgestattet sein kann.

Die beispielhaft beschriebene Anordnung von +- und -Polen bei Energieversorgern und -verbraucher ist nicht zwingend. Je nach Anforderung des Anwenders können die Anschlüsse verschiedenartig ausgestaltet und positioniert werden (z. B. als zwei parallel angeordnete Stifte).

Für die Ausstattung einer Speicherzelle mit einem Gewindezylinder ist grundsätzlich weder die Gestalt der Zelle noch das elektrochemische System entscheidend. Das gleiche gilt für Höhe und Durchmesser des Aufnahmezylinders. Diese Charakteristika werden maßgeblich durch die Funktion als Befestigungsmedium bestimmt.

Das erfindungsgemäße Verbindungssystem betrifft die Verbindung zwischen einem Energieverbraucher nach Patentanspruch 2 mit einem Energieversorger nach Patentanspruch 1, 4, 6, 7 und 8.

Die mit der Erfindung erzielten Vorteile liegen darin, daß herkömmliche Aufnahmebehälter für Energiezellen nicht erforderlich sind. Eine Vielzahl von Geräten kann raum- und gewichtsparend miniaturisiert werden. Energie und Rohstoffe, die für die Herstellung von Batteriegehäusen erforderlich sind, können eingespart werden.

Durch die Verwendung von wiederaufladbaren und auslaufsicheren Energiezellen von hoher Kapazität und Lebensdauer und durch den schnellen Wechsel zwischen mehreren Energieverbrauchern kommt es zur Einsparung von Energie und Rohstoffen bei der Herstellung von Speicherzellen und insbesondere zu einer Entlastung der Bereiche Entsorgung und Recycling.

Der Energieverbraucher kann mit mehr als einer Aufnahmevorrichtung ausgestattet sein.

## Patentansprüche

1. Zylindrische, elektrochemische Speicherzelle mit einer Aufnahmevorrichtung für einen Energieverbraucher,
dadurch gekennzeichnet,
daß der Deckel der Speicherzelle mittig eine kreiszylindrische Erhöhung aufweist,
daß der Mantel des Kreiszylinders außen mit einem Schraubgewinde versehen ist,
daß der Aufnahmezylinder als -Pol der Zelle fungiert und
daß sich der + Pol der Zelle auf der Kreisoberfläche des Zylinders, vom -Pol isoliert, befindet.

2. Energieverbraucher mit einer Aufnahmevorrichtung für eine Speicherzelle nach Patentanspruch 1,
dadurch gekennzeichnet,
daß die den Bestandteil eines Energieverbrauchers bildende Aufnahmevorrichtung eine Befestigungseinrichtung aufweist, die aus einer Fassung mit einem Innengewinde besteht, daß das Innengewinde der Fassung dem Außengewinde des Aufnahmezylinders der Speicherzelle nach Patentanspruch 1 entspricht, daß sich der Kontaktpunkt für den + Pol der Speicherzelle am Boden der Fassung befindet und
daß die Fassung mit einem negativen Anschluß und einer Vorrichtung zur Energieunterbrechung ausgestattet ist.

3. Schraubverbindungssystem zwischen einer Speicherzelle nach Patentanspruch 1 und einem Energieverbraucher nach Patentanspruch 2,
dadurch gekennzeichnet,
daß die Speicherzelle und der Energieverbraucher unmittelbar durch die Schraubverbindung miteinander verbunden sind und
daß sich die +- und -Pole der Speicherzelle und des Energieverbrauchers kontaktieren.

4. Zylindrische, elektrochemische Speicherzelle mit einer Aufnahmevorrichtung nach Patentanspruch 1 mit einer zusätzlichen bodenseitigen Aufnahmevorrichtung für eine Speicherzelle nach Patentanspruch 1,
dadurch gekennzeichnet, daß der Boden der Speicherzelle eine kreiszylindrische Vertiefung aufweist,
daß die kreiszylindrische Vertiefung mit einem Innengewinde versehen ist, das dem Gewindezylinder der Speicherzelle nach Patentanspruch 1 entspricht und
daß der Boden der Fassung aus leitendem Material besteht.

5. Verschlußstopfen für die bodenseitige Aufnahmevorrichtung einer Speicherzelle nach Patentanspruch 4,
dadurch gekennzeichnet,
daß der Verschlußstopfen aus einer runden Bodenplatte mit einem zylindrischen Einschraubgewinde besteht.

6. Zylindrisches, becherförmiges Kunststoffgehäuse für eine Speicherzelle nach Patentanspruch 1,
dadurch gekennzeichnet,
daß das Gehäuse den Mantel und den Boden der Zelle fest umschließt.

7. Kunststoffgehäuse für eine oder mehrere Speicherzellen,
dadurch gekennzeichnet,
daß das Kunststoffgehäuse die gesamte Oberfläche der Zelle/-n bedeckt,
daß das Gehäuse in seinem oberen Bereich so ausgestaltet ist, daß es die Form eines Aufnahmezylinders mit einer Befestigungseinrichtung für einen Energieverbraucher nach Patentanspruch 2 aufweist und
daß die Aufnahmevorrichtung Kontaktbereiche für einen positiven und negativen Anschluß aufweist und diese mit dem +- und -Pol der sich in dem Gehäuse befindenden Zelle/-n verbunden sind.

8. Adapter zur Integration von herkömmlichen Speicherzellen in das Verbindungssystem nach Patentanspruch 3
dadurch gekennzeichnet,
daß der Adapter aus einem zylindrischen Behälter zur Aufnahme von Rundzellen besteht, daß der Behälter in seinem oberen Bereich so ausgestaltet ist, daß er die Form eines Aufnahmezylinders mit einer Befestigungseinrichtung für einen Energieverbraucher nach Patentanspruch 2 aufweist,
daß die Aufnahmevorrichtung Kontaktbereiche für einen positiven und negativen Anschluß aufweist und diese mit dem +- und -Pol der sich in dem Adapter befindenden Zelle/-n verbunden sind und
daß die Innenwandung des Adapters mit Positionierungsvorrichtungen für Rundzellen mit geringem Durchmesser versehen ist und die Länge des Adapters durch Einfügen von Zwischenelementen je nach Anzahl der verwendeten Zellen variierbar ist.

9. Beleuchtungskörper mit einer Aufnahmevorrichtung für einen Energieversorger nach Patentanspruch 1, 4, 6, 7 bzw. 8,
dadurch gekennzeichnet,
daß der Beleuchtungskörper mit einer Aufnahmevorrichtung nach Patentanspruch 2 ausgestattet ist,
daß der Beleuchtungskörper mit einer Aufnahme- und Befestigungsvorrichtung in Form einer Fassung für eine Glühbirne versehen ist, daß die Fassung mit einem negativen Anschluß und einem Schalter zur Energieunterbrechung ausgerüstet ist und
daß der positive Kontakt direkt oder mittels einer Überbrückung durch den Energieversorger erfolgt.
